# EUROPÄISCHE PATENTSCHRIFT

(11) **EP 3 424 691 B1**
(45) Veröffentlichungstag und Bekanntmachung des Hinweises auf die Patenterteilung: **13.05.2020**
(21) Anmeldenummer: 18163514.5
(22) Anmeldetag: 23.03.2018
(51) Int. Cl.: B29D 30/00

(54) **VORRICHTUNG ZUM TRANSPORT UND ZUM WAHLWEISEN VORVERNETZEN EINER AUS EINER KAUTSCHUKMISCHUNG EXTRUDIERTEN MATERIALBAHN**
DEVICE FOR TRANSPORTING AND SELECTIVELY PRE-CROSS-LINKING A MATERIAL WEB EXTRUDED FROM A RUBBER COMPOSITION
DISPOSITIF DE TRANSPORT ET DE PRÉRÉTICULATION SÉLECTIVE D'UNE BANDE DE MATIÈRE EXTRUDÉE D'UN MÉLANGE DE CAOUTCHOUC

(30) Priorität: 21.06.2017 DE 102017210334
(43) Veröffentlichungstag der Anmeldung: 09.01.2019
(73) Patentinhaber: Continental Reifen Deutschland GmbH, 30165 Hannover (DE)
(72) Erfinder: Reitmann, Sebastian, 31558 Hagenburg (DE); Lohner, Alexander, 30851 Langenhagen (DE)
(74) Vertreter: Finger, Karsten

(56) Entgegenhaltungen:
- DE-A1-102006 041 874
- DE-A1-102015 200 078
- US-A- 4 020 354

## Beschreibung

Die Erfindung betrifft eine Vorrichtung zum Transport und zum wahlweisen Vorvernetzen einer aus einer Kautschukmischung extrudierten Materialbahn.

Bei der Reifenherstellung ist es bekannt, aus Kautschukmischungen extrudierte Materialbahnen in Bestrahlungskammern zu transportieren und diese dort mittels Elektronenstrahlen oberflächlich vorzuvernetzen. Die vorvernetzten Materialbahnen weisen gegenüber den aus "rohen" Kautschukmischungen bestehenden Materialbahnen eine reduzierte Klebrigkeit auf und eignen sich zum Aufwickeln auf Wickelspulen zur Zwischenlagerung. Nach dem Zuschneiden der Materialbahnen werden aus diesen entsprechende Reifenbauteile gebildet bzw. aufgebaut.

Eine Vorvernetzung von extrudierten Materialbahnen ist jedoch nicht bei allen Materialbahnen vorgesehen und erforderlich. Ist eine Vorvernetzung vorteilhaft, ergibt sich in der Praxis oft das Problem, dass das Betreiben von Bestrahlungskammern mit einem relativ hohen Wartungsaufwand verbunden ist. Das an und für sich vorteilhafte Einbinden von Bestrahlungskammern im Wesentlichen unmittelbar nach der Extrusion in die Extruderlinie ist daher problematisch, da die erforderliche Wartung der Kammern mit Produktionsausfällen verbunden ist.

Patentdokument DE 10 2006 041 1874 betrifft eine Vorrichtung zur kontinuierlichen Modifizierung von Polymeren im fließfähigen Zustand mittels Elektronenstrahlung.

Der Erfindung liegt daher die Aufgabe zu Grunde, eine Bestrahlungskammer derart in eine Extruderlinie einzubinden zu können, dass durch Wartungsarbeiten bedingte Produktionsausfälle vermieden werden.

Gelöst wird die gestellte Aufgabe erfindungsgemäß mit einer Vorrichtung umfassend:
- eine Bestrahlungskammer mit einer Elektronenstrahlquelle,
- ein an der Bestrahlungskammer angeordnetes Durchlaufband mit einem durch die Bestrahlungskammer hindurchgeführten Lasttrum,
- einen unterhalb der Bestrahlungskammer angeordneter Bypass-Förderer,
- eine bezogen auf die Transportrichtung vor der Bestrahlungskammer angeordnete Zuführeinrichtung, welche in eine zum Durchlaufband führende Position und in eine zum Bypass-Förderer führende Position schwenkbar ist und
- eine bezogen auf die Transportrichtung hinter der Bestrahlungskammer angeordnete Abtransporteinrichtung, welche in eine zum Durchlaufband führende Position und in eine zum Bypass-Förderer führende Position schwenkbar ist.

Bei einer erfindungsgemäßen Vorrichtung besteht durch die der Bestrahlungskammer vorgeordnete schwenkbare Zuführeinrichtung und die der Bestrahlungskammer nachgeordnete schwenkbare Abtransporteinrichtung die Möglichkeit, die extrudierte Materialbahn über den Bypass-Förderer an der Bestrahlungskammer vorbeizuführen. Ist eine Wartung der Bestrahlungskammer erforderlich, braucht die Extrusion nicht unterbrochen zu werden. Insbesondere kann während der Wartungsarbeiten auch eine nicht zur Vorvernetzung vorgesehene Materialbahn extrudiert werden. Es kann auch vorgesehen sein, die Materialbahn über den Bypass-Förderer zu einer zweiten Bestrahlungskammer umzuleiten. Durch die erfindungsgemäße Vorrichtung entfällt ferner die Notwendigkeit einer etwaigen "Offlinebestrahlung", also einer externen Bestrahlung, bei welcher die extrudierte Materialbahn zuerst verpackt und dann zur Elektronenstrahlquelle transportiert werden muss. Eine unmittelbar nach der Extrusion vorvernetzte Materialbahn kann zur Zwischenlagerung haftungsfrei und formstabil auf eine Spule aufgewickelt werden, wobei die Spulen vorteilhafter Weise auch einfach transportiert werden können.

Gemäß einer bevorzugten Ausführungsvariante ist das Durchlaufband ein insbesondere aus Edelstahl bestehendes Kettenförderband. Ein solches Durchlaufband ist gegenüber Elektronenstrahlung beständig und ferner besonders verschleißresistent.

Bevorzugter Weise weist das Durchlaufband ein unterhalb der Bestrahlungskammer rückgeführtes Leertrum auf. Es ist daher lediglich das Lasttrum des Durchlaufbandes durch die Bestrahlungskammer durchgeführt, was im Hinblick auf erforderliche Strahlenschutzmaßnahmen von Vorteil ist. Gemäß einer alternativen Ausführungsvariante weist das Durchlaufband ein in der die Bestrahlungskammer rückgeführtes Leertrum auf.

Gemäß einer weiteren bevorzugten Ausführungsvariante ist die Zuführeinrichtung um eine Achse, welche mit der Drehachse einer Umlenkrolle einer unmittelbar an die Zuführeinrichtung anschließenden Transporteinrichtung zusammenfällt, schwenkbar. Auf analoge Weise ist die Abtransporteinrichtung um eine Achse, welche mit der Drehachse einer Umlenkrolle einer unmittelbar an die Abtransporteinrichtung anschließenden Transporteinrichtung zusammenfällt, schwenkbar.

Die schwenkbare Abtransporteinrichtung sowie die schwenkbare Zuführeinrichtung lassen sich auf besonders einfache Weise anordnen und betätigen, wenn sich das Durchlaufband und der Bypass-Förderer in Seitenansicht parallel zueinander und in vertikaler Richtung übereiander erstrecken. In diesem Zusammenhang ist es ferner von Vorteil, wenn das Durchlaufband und der Bypass-Förderer die Bestrahlungskammer seitlich in übereinstimmendem Ausmaß überragen.

Die Zuführeinrichtung, der Bypass-Förderer und die Abtransporteinrichtung weisen bevorzugter Weise jeweils ein Transportband oder ein Kettenförderband auf oder sind in bevorzugter Weise Rollenförderer.

Gemäß einer weiteren bevorzugten Ausführungsvariante schließt an die Bestrahlungskammer beidseitig jeweils eine gehäuseartige Schutzabdeckung an. Die Schutzabdeckungen dienen insbesondere dem Personenschutz. Bevorzugter Weise weist jede Schutzabdeckung unmittelbar an die Bestrahlungskammer anschließende stationäre Abdeckteile und einen gemeinsam mit der Zuführeinrichtung bzw. der Abtransporteinrichtung schwenkbaren Abdeckteil auf. An der Oberseite des schwenkbaren Abdeckteiles ist vorzugsweise eine gebogene Abdeckwand angeordnet, welche bei zum Bypass-Förderer geschwenkter Zuführeinrichtung bzw. bei zum Bypass-Förderer geschwenkter Abtransporteinrichtung den stationären Abdeckteil abdeckt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine schematische seitliche Schnittansicht einer Vorrichtung gemäß einer Ausführungsvariante der Erfindung in einem ersten Betriebszustand und
Fig. 2 eine schematische seitliche Schnittansicht der Vorrichtung aus Fig. 1 in einem zweiten Betriebszustand.

In der nachfolgenden Beschreibung verwendete Richtungsangaben beziehen sich, falls nicht anders erwähnt, auf die Lage der einzelnen Bauteile der Vorrichtung wie in den Figuren gezeigt.

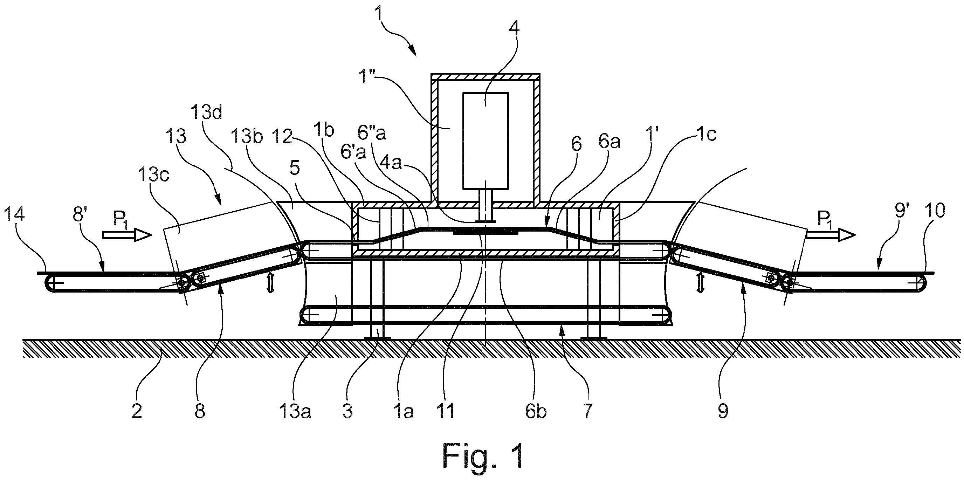

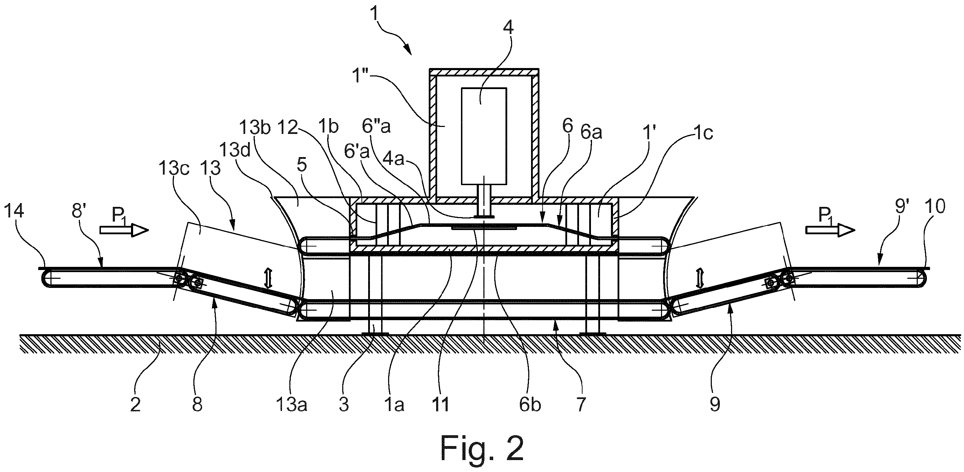

Wie Fig. 1 und Fig. 2 zeigen, umfasst die Vorrichtung eine Bestrahlungseinrichtung 1 und eine Transportvorrichtung.

Die Bestrahlungseinrichtung 1 ist auf am Untergrund 2 aufstehenden Stützen 3 angeordnet und weist eine Bestrahlungskammer 1' und eine auf diese aufgesetzte Kammer 1" auf. In der aufgesetzten Kammer 1" ist eine in die Bestrahlungskammer 1' hineinragende zur Vorvernetzung von Kautschukmischungen geeignete Elektronenstrahlquelle 4 positioniert, welche ein innerhalb der Bestrahlungskammer 1' befindliches Bestrahlungsfenster 4a aufweist. Die Bestrahlungskammer 1' ist parallel zum Untergrund 2 langgestreckt ausgeführt und weist einen Boden 1a, eine Decke 1b, an ihren Stirnseiten jeweils eine senkrecht zum Untergrund 2 orientierte Stirnwand 1c sowie weitere in Fig. 1 nicht zu sehende langgestreckte Seitenwände auf. In jeder Stirnwand 1c ist am unteren Bereich ein waagrechter Schlitz 5 ausgebildet.

Die Transportvorrichtung umfasst ein Durchlaufband 6, ein Bypass-Band 7, ein Zuführband 8 und ein Abtransportband 9 sowie beim gezeigten Ausführungsbeispiel weitere Transportbänder 8', 9'. Jedes dieser Bänder 6, 7, 8, 8', 9, 9' ist an zwei in den Figuren angedeuteten Umlenkrollen 10 umlaufend angeordnet, wobei jeweils eine der Umlenkrollen 10 in bekannter Weise angetrieben ist. Die Transportrichtung ist in Fig. 1 und Fig. 2 jeweils durch zwei Pfeil P₁ gekennzeichnet.

Das Durchlaufband 6 ist bevorzugter Weise ein insbesondere aus rostfreiem Edelstahl bestehendes Kettenförderband. Das Bypass-Band 7, das Zuführband 8, das Abtransportband 9 sowie die weiteren Transportbänder 8', 9' können ebenfalls Kettenförderbänder sein. Das Bypass-Band 7, das Zuführband 8, das Abtransportbandes 9 und die weiteren Transportbänder 8', 9' können auch Rollenförderer sein.

Das Durchlaufband 6 ist an der Bestrahlungskammer 1' angeordnet, wobei die Umlenkrollen 10 des Durchlaufbandes 6 außerhalb der Bestrahlungskammer 1' neben den Schlitzen 5 positioniert sind. Das Lasttrum 6a des Durchlaufbandes 6 ist durch die Bestrahlungskammer 1' hindurchgeführt, das Leertrum 6b des Durchlaufbandes 6 verläuft beim gezeigten Ausführungsbeispiel unterhalb und damit außerhalb der Bestrahlungskammer 1', kann alternativ jedoch ebenfalls durch die Bestrahlungskammer 1' hindurchgeführt sein. Das Lasttrum 6a ist ferner innerhalb der Bestrahlungskammer 1' derart über nicht gezeigte Umlenkeinrichtungen, beispielsweise Rollen, Kettenräder oder dergleichen, umgelenkt, dass es im Längsschnitt zwei geneigte Lasttrumabschnitte 6'a aufweist, die jeweils von einer der Stirnwände 1c zur Elektronenstrahlquelle 4 ansteigen, und einen knapp unterhalb des Bestrahlungsfensters 4a sowie zwischen den geneigten Lasttrumabschnitten 6'a waagrecht verlaufenden Lasttrumabschnitt 6"a besitzt. Unmittelbar unterhalb des waagrecht verlaufenden Lasttrumabschnittes 6"a ist ein plattenförmiger Elektronenfänger 11 angeordnet, welcher insbesondere ein wassergekühlter Edelstahlkörper ist.

Innerhalb der Bestrahlungskammer 1' sind im Bereich der geneigten Lasttrumabschnitte 6'a von der Decke 1b und vom Boden 1a der Bestrahlungskammer 1' senkrecht abstehende Platten 12 angeordnet, wobei zwischen den freien Enden der von der Decke 1b abstehenden Platten 12 und den freien Enden der vom Boden 1a abstehenden Platten 12 ein Freiraum besteht, durch welchen die geneigte Lasttrumabschnitte 6'a durchgeführt sind. Die Platten 12 bestehen insbesondere aus Blei und dienen zur Abschirmung von Röntgenstrahlung, welche bei der Abbremsung der Elektronen entsteht ("Bremsstrahlung"), sodass sichergestellt ist, dass Röntgenstrahlung höchstens in geringer, unter vorgegebenem Grenzwert liegender Dosis über die Schlitze 5 aus der Bestrahlungskammer 1' entweichen kann. Bevorzugter Weise sind im Bereich jedes geneigten Lasttrumabschnittes 6'a an der Decke 1b und am Boden 1a jeweils drei bis fünf, beim gezeigten Ausführungsbeispiel drei, Platten 12 angeordnet.

Das Bypass-Band 7 verläuft unterhalb der Bestrahlungskammer 1' sowie im Wesentlichen waagrecht und parallel zum Durchlaufband 6, wobei die Umlenkrollen 10 des Bypass-Bandes 7 senkrecht unterhalb der Umlenkrollen 10 des Durchlaufbandes 6 liegen, sodass das Durchlaufband 6 und das Bypass-Band 7 die Bestrahlungskammer 1' seitlich in übereinstimmendem Ausmaß überragen.

Das Transportband 8' und das Zuführband 8 sind hintereinander angeordnet und befinden sich, bezogen auf die Transportrichtung, vor dem Durchlaufband 6 und dem Bypass-Band 7, wobei das Zuführband 8 zwischen dem Transportband 8' und dem Durchlaufband 6 bzw. dem Bypass-Band 7 angeordnet ist. Das Zuführband 8 ist im Bereich seines beim Transportband 8' liegenden Endes schwenkbar gelagert, sodass sein anderes, freies Ende in eine Position zum linken Ende des Durchlaufbandes 6 und in eine Position zum linken Ende des Bypass-Bandes 7 schwenkbar ist. Beim gezeigten Ausführungsbeispiel fällt die Schwenkachse des Zuführbandes 8 mit der Drehachse der rechten Umlenkrolle 10 des Transportbandes 8' zusammen.

Das Transportband 9' und das Abtransportband 9 sind ebenfalls hintereinander angeordnet und befinden sich, bezogen auf die Transportrichtung, hinter dem Durchlaufband 6 und dem Bypass-Band 7, wobei das Abtransportband 9 zwischen dem Transportband 9' und dem Durchlaufband 6 bzw. dem Bypass-Band 7 angeordnet ist. Das Abtransportband 9 ist im Bereich seines beim Transportband 9' liegenden Endes schwenkbar gelagert, sodass sein anderes, freies Ende in eine Position zum rechten Ende des Durchlaufbandes 6 und in eine Position zum rechten Ende des Bypass-Bandes 7 schwenkbar ist. Beim gezeigten Ausführungsbeispiel fällt die Schwenkachse des Abtransportbandes 9 mit der Drehachse der linken Umlenkrolle 10 des Transportbandes 9' zusammen.

An den Stirnwänden 1c der Bestrahlungskammer 1' schließt jeweils eine mehrteilige gehäuseartige Schutzabdeckung 13 an. Jede Schutzabdeckung 13 weist einen unteren stationären Abdeckteil 13a, einen auf diesem aufgesetzten oberen stationären Abdeckteil 13b, sowie einen schwenkbaren Abdeckteil 13c auf. Die oberen stationären Abdeckteile 13b grenzen an die Stirnwände 1c an und umgeben den außerhalb der Bestrahlungskammer 1' befindlichen Endabschnitt des Durchlaufbandes 6. Die unteren stationären Abdeckteile 13a umgeben die beiden über die Bestrahlungskammer 1' hinausragenden Endabschnitte des Bypass-Bandes 7. Die jeweils aufeinander angeordneten stationären Abdeckteilteile 13a und 13b weisen am Zuführband 8 bzw. am Abtransportband 9 eine nach innen gewölbte Kontur auf, welche, im Schnitt betrachtet, entlang eines Radius gerundet ist. Der Mittelpunkt des dem Radius zugrundliegenden Kreises liegt auf der entsprechenden und bereits erwähnten Schwenkachse des Zuführbandes 8 bzw. des Abtransportbandes 9. Der linke schwenkbare Abdeckteil 13c umgibt das Zuführband 8 und der rechte schwenkbare Abdeckteil 13c umgibt das Abtransportband 9. Auf der Oberseite jedes schwenkbaren Abdeckteiles 13c ist an der den stationären Abdeckteilen 13a, 13b zugewandten Kante des schwenkbaren Abdeckteiles 13c eine gebogene Abdeckwand 13d aufgesetzt. Der schwenkbare Abdeckteil 13c und die Abdeckwand 13d sind derart nach außen gewölbt, dass ihre Wölbung mit der Wölbung der beiden stationären Abdeckteile 13a, 13b korrespondiert.

Beim gezeigten Ausführungsbeispiel reicht der linke schwenkbaren Abdeckteil 13c hinter die am Zuführband 8 liegende Umlenkrolle 10 des Transportbandes 8' und der rechte schwenkbare Abdeckteil 13c reicht hinter die am Abtransportband 9 liegende Umlenkrolle 10 des Transportbandes 9'.

In Fig. 1 sind das Zuführband 8 und das Abtransportband 9 zum Durchlaufband 6 geschwenkt, sodass die schwenkbaren Abdeckteile 13c an den jeweiligen oberen stationären Abdeckteil 13b anschließen und die gebogenen Abdeckwände 13d über die oberen stationären Abdeckteile 13b hinausragen. In diesem ersten Betriebszustand wird eine aus einer Kautschukmischung extrudierte Materialbahn 14 durch die Bestrahlungskammer 1' durchgeleitet und in dieser von der Elektronenstrahlung der Elektronenstrahlquelle 4 vorvernetzt. Zur Vorvernetzung sind beispielsweise Materialbahnen 14 vorgesehen, aus welchen nachfolgend Seitenwände, Laufstreifen oder Innenschichten für Fahrzeugluftreifen gebildet werden.

In Fig. 2 sind das Zuführband 8 und das Abtransportband 9 zum Bypass-Band 7 geschwenkt, sodass die schwenkbaren Abdeckteile 13c an den jeweiligen unteren stationären Abdeckteil 13b anschließen und die gebogenen Abdeckwände 13d die oberen stationären Abdeckteile 13b verschließen bzw. abdecken. In diesem, zweiten Betriebszustand wird die Materialbahn 14 über das Bypass-Band 7 an der Bestrahlungskammer 1' vorbeigeleitet und daher nicht bestrahlt.

### Bezugszeichenliste

- 1 ......................: Bestrahlungseinrichtung
- 1' .....................: Bestrahlungskammer
- 1".....................: Kammer
- 1a ....................: Boden
- 1b ....................: Decke
- 1c ....................: Stirnwand
- 2 ......................: Untergrund
- 3 ......................: Stütze
- 4 ......................: Elektronenstrahlquelle
- 4a ....................: Bestrahlungsfenster
- 5 ......................: Schlitz
- 6 ......................: Durchlaufband
- 6a ....................: Lasttrum
- 6'a, 6"a ...........: Lasttrumabschnitt
- 6b ....................: Leertrum
- 7 ......................: Bypass-Band
- 8 ......................: Zuführband
- 8' .....................: Transportband
- 9 ......................: Abtransportband
- 9' .....................: Transportband
- 10 ....................: Umlenkrolle
- 11 ....................: Elektronenfänger
- 12 ....................: Platte
- 13 ....................: Schutzabdeckung
- 13a, 13b...........: stationärer Abdeckteil
- 13c ..................: schwenkbarer Abdeckteil
- 13d ..................: Abdeckwand
- 14 ....................: Materialbahn
- P₁.....................: Pfeil (Transportrichtung)

## Patentansprüche

1. Vorrichtung zum Transport und zum wahlweisen Vorvernetzen einer aus einer Kautschukmischung extrudierten Materialbahn (14) umfassend:
- eine Bestrahlungskammer (1') mit einer Elektronenstrahlquelle (4),
- ein an der Bestrahlungskammer (1') angeordnetes Durchlaufband (6) mit einem durch die Bestrahlungskammer (1') hindurchgeführten Lasttrum (6a),
- einen unterhalb der Bestrahlungskammer (1') angeordneter Bypass-Förderer (7),
- eine bezogen auf die Transportrichtung (P₁) vor der Bestrahlungskammer (1') angeordnete Zuführeinrichtung (8), welche in eine zum Durchlaufband (6) führende Position und in eine zum Bypass-Förderer (7) führende Position schwenkbar ist und **dadurch gekennzeichnet dass**
- eine bezogen auf die Transportrichtung (P₁) hinter der Bestrahlungskammer (1') angeordnete Abtransporteinrichtung (9), welche in eine zum Durchlaufband (6) führende Position und in eine zum Bypass-Förderer (7) führende Position schwenkbar ist.

2. Vorrichtung nach Anspruch 1, **dadurch gekennzeichnet, dass** das Durchlaufband (6) ein insbesondere aus rostfreiem Edelstahl bestehendes Kettenförderband ist.

3. Vorrichtung nach Anspruch 1 oder 2, **dadurch gekennzeichnet, dass** das Durchlaufband (6) ein unterhalb der Bestrahlungskammer (1') rückgeführtes Leertrum (6b) aufweist.

4. Vorrichtung nach Anspruch 1 oder 2, **dadurch gekennzeichnet, dass** das Durchlaufband (6) ein durch die Bestrahlungskammer (1') rückgeführtes Leertrum (6b) aufweist.

5. Vorrichtung nach einem der Ansprüche 1 bis 4, **dadurch gekennzeichnet, dass** die Zuführeinrichtung (8) um eine Achse, welche mit der Drehachse einer Umlenkrolle (10) einer unmittelbar an die Zuführeinrichtung (8) anschließenden Transporteinrichtung (8') zusammenfällt, schwenkbar ist.

6. Vorrichtung nach einem der Ansprüche 1 bis 5, **dadurch gekennzeichnet, dass** die Abtransporteinrichtung (9) um eine Achse, welche mit der Drehachse einer Umlenkrolle (10) einer unmittelbar an die Abtransporteinrichtung (9) anschließendnen Transporteinrichtung (9') zusammenfällt, schwenkbar ist.

7. Vorrichtung nach einem der Ansprüche 1 bis 6, **dadurch gekennzeichnet, dass** sich das Durchlaufband (6) und das Bypass-Förderer (7) in Seitenansicht parallel zueinander und in vertikaler Richtung übereinander erstrecken.

8. Vorrichtung nach einem der Ansprüche 1 bis 7, **dadurch gekennzeichnet, dass** das Durchlaufband (6) und der Bypass-Förderer (7) die Bestrahlungskammer (1') seitlich in übereinstimmendem Ausmaß überragen.

9. Vorrichtung nach einem der Ansprüche 1 bis 8, **dadurch gekennzeichnet, dass** die Zuführeinrichtung (8) ein Transportband oder ein Kettenförderband aufweist oder ein Rollenförderer ist.

10. Vorrichtung nach einem der Ansprüche 1 bis 9, **dadurch gekennzeichnet, dass** der Bypass-Förderer (7) ein Transportband oder ein Kettenförderband aufweist oder ein Rollenförderer ist.

11. Vorrichtung nach einem der Ansprüche 1 bis 10, **dadurch gekennzeichnet, dass** die Abtransporteinrichtung (9) ein Transportband oder ein Kettenförderband aufweist oder ein Rollenförderer ist.

12. Vorrichtung nach einem der Ansprüche 1 bis 11, **dadurch gekennzeichnet, dass** an die Bestrahlungskammer (1') beidseitig jeweils eine gehäuseartige Schutzabdeckung (13) anschließt.

13. Vorrichtung nach Anspruch 12, **dadurch gekennzeichnet, dass** jede Schutzabdeckung (13) unmittelbar an die Bestrahlungskammer (1') anschließende stationäre Abdeckteile (13b) und einen gemeinsam mit der Zuführeinrichtung (8) bzw. der Abtransporteinrichtung (9) schwenkbaren Abdeckteil (13c) aufweist.

14. Vorrichtung nach Anspruch 13, **dadurch gekennzeichnet, dass** an der Oberseite des schwenkbaren Abdeckteiles (13c) eine gebogene Abdeckwand (13d) angeordnet ist, welche bei zum Bypass-Förderer (7) geschwenkter Zuführeinrichtung (8) bzw. bei zum Bypass-Förderer (7) geschwenkter Abtransporteinrichtung (9) den stationären Abdeckteil (13b) abdeckt.

## Claims

1. Device for transporting and selectively pre-crosslinking a material web (14) extruded from a rubber composition comprising:
- an irradiating chamber (1') with an electron beam source (4),
- a running-through belt (6), arranged at the irradiating chamber (1') and having a load side (6a) led through the irradiating chamber (1'),
- a bypass conveyor (7), arranged underneath the irradiating chamber (1'),
- a feeding device (8), which is arranged ahead of the irradiating chamber (1') with respect to the transporting direction (P₁) and can be pivoted into a position leading to the running-through belt (6) and into a position leading to the bypass conveyor (7), and **characterized by**
- a transporting-away device (9), which is arranged after the irradiating chamber (1') with respect to the transporting direction (P₁) and can be pivoted into a position leading to the running-through belt (6) and into a position leading to the bypass conveyor (7).

2. Device according to Claim 1, **characterized in that** the running-through belt (6) is a chain conveyor belt, consisting in particular of stainless high-grade steel.

3. Device according to Claim 1 or 2, **characterized in that** the running-through belt (6) comprises a return side (6b) taken back underneath the irradiating chamber (1').

4. Device according to Claim 1 or 2, **characterized in that** the running-through belt (6) comprises a return side (6b) taken back through the irradiating chamber (1').

5. Device according to one of Claims 1 to 4, **characterized in that** the feeding device (8) can be pivoted about an axis which coincides with the axis of rotation of a deflecting roller (10) of a transporting device (8') directly adjoining the feeding device (8).

6. Device according to one of Claims 1 to 5, **characterized in that** the transporting-away device (9) can be pivoted about an axis which coincides with the axis of rotation of a deflecting roller (10) of a transporting device (9') directly adjoining the transporting away device (9).

7. Device according to one of Claims 1 to 6, **characterized in that** the running-through belt (6) and the bypass conveyor (7) extend parallel to one another in side view and one above the other in the vertical direction.

8. Device according to one of Claims 1 to 7, **characterized in that** the running-through belt (6) and the bypass conveyor (7) project laterally beyond the irradiating chamber (1') to the same extent.

9. Device according to one of Claims 1 to 8, **characterized in that** the feeding device (8) comprises a transporting belt or a chain conveyor belt or is a roller conveyor.

10. Device according to one of Claims 1 to 9, **characterized in that** the bypass conveyor (7) comprises a transporting belt or a chain conveyor belt or is a roller conveyor.

11. Device according to one of Claims 1 to 10, **characterized in that** the transporting-away device (9) comprises a transporting belt or a chain conveyor belt or is a roller conveyor.

12. Device according to one of Claims 1 to 11, **characterized in that** the irradiating chamber (1') is adjoined on each of both sides by a housing-like protective covering (13).

13. Device according to Claim 12, **characterized in that** each protective covering (13) comprises stationary covering parts (13b) that directly adjoin the irradiating chamber (1') and a covering part (13c) that can be pivoted together with the feeding device (8) or the transporting-away device (9).

14. Device according to Claim 13, **characterized in that** on the upper side of the pivotable covering part (13c) there is arranged an arcuate covering wall (13d), which covers the stationary covering part (13b) when the feeding device (8) is pivoted towards the bypass conveyor (7) or when the transporting-away device (9) is pivoted towards the bypass conveyor (7) .

## Revendications

1. Arrangement de transport et de préréticulation sélective d'une bande de matière (14) extrudée à partir d'un mélange de caoutchouc, comprenant :
- une chambre d'irradiation (1') comprenant une source de rayons électroniques (4),
- une bande continue (6) disposée au niveau de la chambre d'irradiation (1') et comprenant un brin en charge (6a) qui est passé à travers la chambre d'irradiation (1'),
- un convoyeur de dérivation (7) disposé au-dessous de la chambre d'irradiation (1'),
- un dispositif d'amenée (8), disposé devant la chambre d'irradiation (1') en référence à la direction de transport (P₁), lequel peut être pivoté dans une position qui mène à la bande continue (6) et dans une position qui mène au convoyeur de dérivation (7) et **caractérisé par**
- un dispositif d'évacuation (9) disposé derrière la chambre d'irradiation (1') en référence à la direction de transport (P₁), lequel peut être pivoté dans une position qui mène à la bande continue (6) et dans une position qui mène au convoyeur de dérivation (7).

2. Arrangement selon la revendication 1, **caractérisé en ce que** la bande continue (6) est notamment une bande transporteuse à chaîne constituée d'acier inoxydable.

3. Arrangement selon la revendication 1 ou 2, **caractérisé en ce que** la bande continue (6) possède un brin vide (6b) qui est renvoyé au-dessous de la chambre d'irradiation (1').

4. Arrangement selon la revendication 1 ou 2, **caractérisé en ce que** la bande continue (6) possède un brin vide (6b) qui est renvoyé à travers la chambre d'irradiation (1').

5. Arrangement selon l'une des revendications 1 à 4, **caractérisé en ce que** le dispositif d'amenée (8) peut pivoter autour d'un axe, lequel coïncide avec l'axe de rotation d'un rouleau de renvoi (10) d'un dispositif de transport (8') qui est rattaché directement au dispositif d'amenée (8).

6. Arrangement selon l'une des revendications 1 à 5, **caractérisé en ce que** le dispositif d'évacuation (9) peut pivoter autour d'un axe, lequel coïncide avec l'axe de rotation d'un rouleau de renvoi (10) d'un dispositif de transport (9') qui est rattaché directement au dispositif d'évacuation (9).

7. Arrangement selon l'une des revendications 1 à 6, **caractérisé en ce que** la bande continue (6) et le convoyeur de dérivation (7), en vue latérale, s'étendent parallèlement l'un à l'autre et l'un au-dessus de l'autre dans la direction verticale.

8. Arrangement selon l'une des revendications 1 à 7, **caractérisé en ce que** la bande continue (6) et le convoyeur de dérivation (7) font saillie latéralement de la chambre d'irradiation (1') d'une étendue coïncidente.

9. Arrangement selon l'une des revendications 1 à 8, **caractérisé en ce que** le dispositif d'amenée (8) comporte une bande transporteuse ou une bande de convoyage à chaîne ou est un convoyeur à rouleaux.

10. Arrangement selon l'une des revendications 1 à 9, **caractérisé en ce que** le convoyeur de dérivation (7) comporte une bande transporteuse ou une bande de convoyage à chaîne ou est un convoyeur à rouleaux.

11. Arrangement selon l'une des revendications 1 à 10, **caractérisé en ce que** le dispositif d'évacuation (9) comporte une bande transporteuse ou une bande de convoyage à chaîne ou est un convoyeur à rouleaux.

12. Arrangement selon l'une des revendications 1 à 11, **caractérisé en ce qu'**un capotage de protection (13) de type boîtier se rattache respectivement des deux côtés de la chambre d'irradiation (1').

13. Arrangement selon la revendication 12, **caractérisé en ce que** chaque capotage de protection (13) possède des pièces de recouvrement fixes (13b) qui se rattachent à la chambre d'irradiation (1') et une pièce de recouvrement pivotante (13c) qui peut pivoter conjointement avec le dispositif d'amenée (8) ou le dispositif d'évacuation (9).

14. Arrangement selon la revendication 13, **caractérisé en ce qu'**une paroi de recouvrement courbe (13d) est disposée au niveau du côté supérieur de la pièce de recouvrement pivotante (13c), laquelle recouvre la pièce de recouvrement fixe (13b) lorsque le dispositif d'amenée (8) est pivoté vers le convoyeur de dérivation (7) ou lorsque le dispositif d'évacuation (9) est pivoté vers le convoyeur de dérivation (7).
